# EUROPEAN PATENT SPECIFICATION

(11) **EP 0 707 388 B1**
(45) Date of publication and mention of the grant of the patent: **07.12.2005**
(21) Application number: 94307493.0
(22) Date of filing: 12.10.1994
(51) Int. Cl.: H04B 5/00, H01P 1/06

(54) **Signal transmission device using a fixed and a rotatable body**
Signalübertragungseinrichtung unter Verwendung eines festen und eines drehbaren Körpers
Dispositif de transmission d'un signal utilisant un corps fixe et un corps rotatif

(43) Date of publication of application: 17.04.1996
(73) Proprietor: DAI NIPPON PRINTING CO., LTD., Shinjuku-ku, Tokyo-to (JP)
(72) Inventor: Hoshino, Masaru, c/o Dai Nippon Printing Co.,Ltd., Shinjuku-ku, Tokyo-to (JP); Sano, Toyokazu, c/o Forth-Coming Industry Co., Ishikari-cho, Ishikari-gun, Hokkaido, (JP); Oe, Takeo, c/o Forth-Coming Industry Co., Ishikari-cho, Ishikari-gun, Hokkaido, (JP)
(74) Representative: Needle, Jacqueline

(56) References cited:
- EP-A- 0 481 048
- WO-A-83/02352
- GB-A- 2 234 859
- US-A- 4 327 334
- US-A- 4 518 958
- US-A- 4 631 504
- PATENT ABSTRACTS OF JAPAN vol. 5, no. 86 (E-060) 27 August 1979 & JP-A-56 032 803 (SONY) 2 April 1981
- RCA REVIEW, vol.47, no.4, December 1986, PRINCETON (US) pages 644 - 654 ASKEW 'MICROWAVE SLIP RING FOR INTERNAL COMMUNICATIONS IN TURRETED VEHICLES'
- PATENT ABSTRACTS OF JAPAN vol. 018, no. 549 (E-1618) 19 October 1994 & JP 06 197 052 A (DAINIPPON PRINTING CO LTD) 15 July 1994

## Description

The present invention relates to a signal transmission device.

Hitherto, between a transmitting unit and a receiving unit which are separately constructed and rotated in a non-contacting manner, a signal is transmitted by wireless transmission system utilizing transmitting and receiving antennas. However, in a wireless transmission system, intermixture of external noise is unavoidable, and therefore such a system is unreliable in accurate signal transmission.

Japanese Published Applications Nos. JP5090830 and JP6197052 propose a signal transmission system for transmitting signals between a transmitting unit and a receiving unit which are rotated relatively to each other in a non-contacting manner. In these proposed systems, a signal is transmitted between the transmitting unit and the receiving unit in a non-contacting manner, and accordingly, the desired signal is reliably transmitted between units which are rotated relatively to each other.

However, in such a signal transmission system, problems exist. For example, in the above system, a signal is mainly transmitted by travelling wave component thereof which has wavelength corresponding to the frequency of the signal to be transmitted. If the magnitude level of the travelling wave component received by the receiving unit is not large enough, the signal cannot be appropriately transmitted.

Secondly, the gain of the transmitted signal is not flat within the transmission frequency band thereof. Namely, the gains of the signal are different frequency to frequency, and peak points and bottom points of the transmission gain repeatedly appear along a frequency axis. Accordingly, when a plurality of signals are modulated into different carriers within the transmission frequency band and then transmitted, a number of signals to be transmitted are limited by the transmission characteristics because the carrier frequencies have to be selected from the peak point frequencies where the transmission gain is sufficient. In addition, at frequencies slightly deviated from the peak point frequencies, the transmission gain is suddenly decreased and therefore transmission accuracy is deteriorated even if the peak point frequency is used as a carrier.

Furthermore, in such a signal transmission system, it is desired to perform bi-directional transmission. For example, in an inspection system in which objects are photographed by inspection cameras and the quality of the objects are judged based on the image signals, an inspection image signal is required to be transmitted from a detection unit to a signal processing unit, whilst a synchronising signal for controlling the inspection cameras is required to be transmitted from the signal processing unit to the detection unit. In such a case, two signal transmission systems are prepared for the image signal transmission and the synchronising signal transmission. However, in some kind of systems, it is difficult to provide a plurality of signal transmission systems. In addition, if bi-directional transmission is realised by a unique transmission device, the construction of the whole system and control of the system are simplified.

The present invention seeks to provide a signal transmission apparatus capable of reliably and effectively transmitting signals.

US-A-4327334 describes a signal transmission device comprising:
a first body fixed to a rotary shaft which pierces through the first body, said first body revolving together with the rotary shaft around an axis of the rotary shaft;
a second body stationarily disposed around the rotary shaft;
a first conductive element disposed in the first body;
a second conductive element disposed in the second body;
a first balun unit for supplying a signal to a signal-input point of one of the first and second conductive elements; and
a second balun unit for receiving a signal from a signal-output point of the second element.

According to the present invention, a signal transmission device as defined above is characterised in that each of said first body and said second body is made of electromagnetic shielding material;
in that said first balun unit comprises a first balun stage for converting the impedance of a signal to be transmitted from a first impedance to a second impedance which is higher than the first impedance; and a second balun stage for converting the impedance of the signal output by the first balun stage from the second impedance to the first impedance and for equally supplying the converted signal to multiple signal-input points on the first conductive element;
and in that said second balun unit comprises a first balun stage for converting the impedance of the signal received equally from multiple signal-output points on the second conductive element from a first impedance to a second impedance which is higher than the first impedance; and a second balun stage for converting the impedance of the signal output by the first balun stage from the second impedance to the first impedance to produce an output signal.

As the signal to be transmitted is supplied equally to multiple signal input points on the first conductive element via baluns signal reflections are absorbed. Further, the signal transmission intensity between the elements is averaged, and therefore the signal is transmitted stably with less variation of transmission gain within the signal transmission band. Signal deterioration due to external disturbances or variation in physical shapes of the elements may be avoided.

Preferably, the number of signal-input points is different to the number of signal-output points.

In an embodiment, said signal transmission device further comprises a first duplexer for passing a signal within a first predetermined frequency band and supplying the passed signal to the first conductive element; and a second duplexer for receiving a signal from the second element and passing the signal within a second frequency band.

In a signal transmission device as described above, bi-directional transmission is realised in a rotary system in which a portion of the system revolves.

In an embodiment, in a signal transmission device as defined above one of the first body and the second body comprises at least one annular groove, the annular groove produces a ring-shaped hollow chamber when the first body and the second body are coupled to each other, and the first element and the second element are opposed to each other in the hollow chamber.

Embodiments of the present invention will hereinafter be described, by way of example, with reference to the accompanying drawings, in which:
Figure 1 is a perspective view of a rotary tube inspection system according to the present invention;
Figure 2 is a side view of the rotary tube inspection system shown in Figure 1;
Figure 3 is a diagram illustrating movement of laminate tube in the system shown in Figures 1 and 2;
Figures 4A - 4D are cross sectional views of an insertion portion of the rotary tube inspection system;
Figures 5A - 5D are diagrams illustrating inspection manner of the laminate tube according to the rotary tube inspection system;
Figure 6 is a block diagram illustrating a signal processing according to the rotary tube inspection system;
Figure 7 is a side view showing a signal transmission device of the present invention;
Figures 8A and 8B are plan views of the device shown in Figure 7;
Figures 9A and 9B are plan views showing transmitting element and receiving element of the device shown in Figure 7;
Figure 10 is a diagram illustrating the construction of the signal transmission device of Figure 7;
Figure 11 is a diagram illustrating the circuit configuration of the signal transmission device of Figure 7;
Figure 12 is a diagram illustrating the transmission characteristic of a device as in Figure 7;
Figures 13A and 13B are diagrams showing a spiral element type signal transmission device and its transmission characteristic;
Figures 14A and 14B are diagrams showing a spiral element type signal transmission device and its transmission characteristic;
Figures 15A and 15B are plan views showing transmitting and receiving elements of a device as shown in Figure 7;
Figure 16 is a diagram illustrating the relationship between signal transmission elements and the body of the device;
Figure 17A - 17C are views showing examples of features of a signal transmission device as Figure 7;
Figure 18 is a block diagram illustrating the construction of a signal transmission device of the invention;
Figure 19 is a diagram illustrating transmission characteristics of duplexers;
Figure 20 is a block diagram illustrating detailed construction of the signal transmission device of Figure 18; and
Figure 21 is a diagram illustrating an embodiment of a signal transmission device.

### Rotary Tube Inspection System:

Prior to describing preferred embodiments of signal transmission device according to the invention, a rotary tube inspection system to which the signal transmission device is applied will be described below.

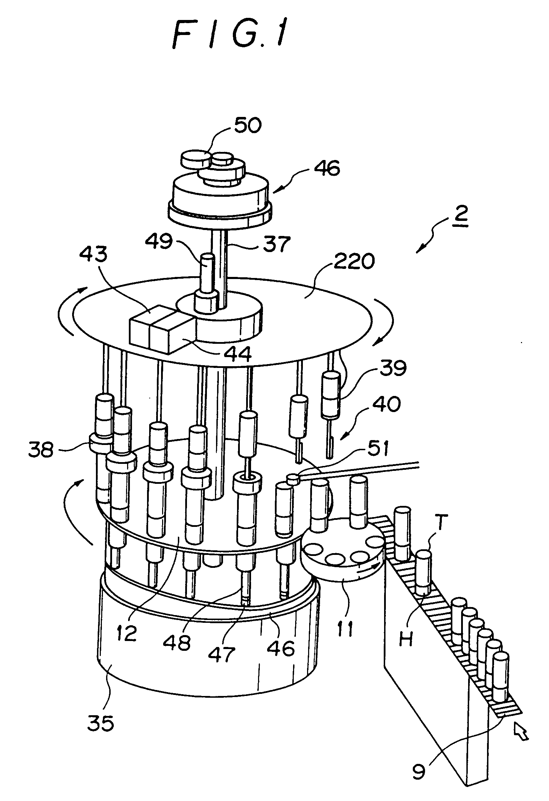

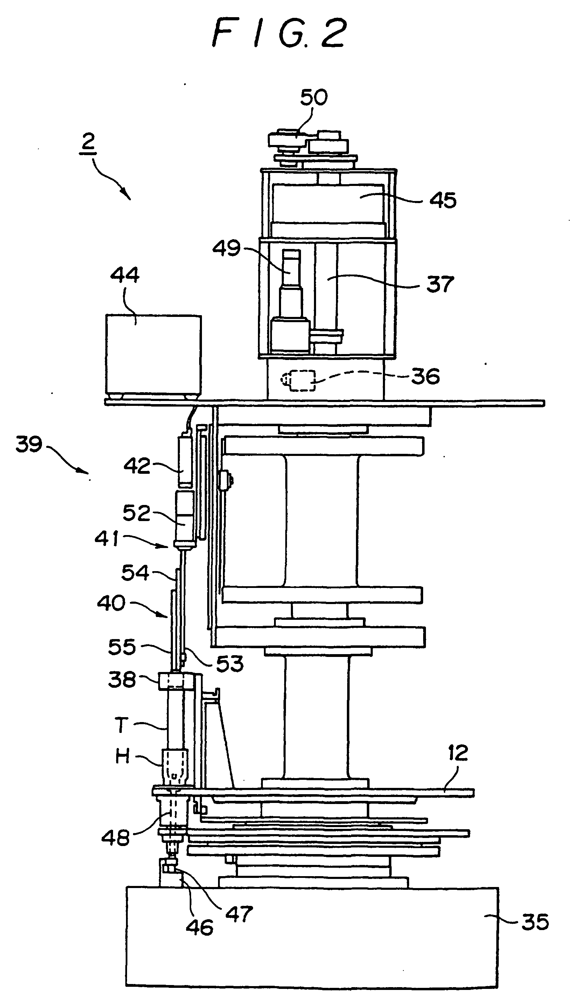

Figures 1 and 2 illustrate a construction of a rotary tube inspection system to which a signal transmission device of the present invention is applied. As illustrated, the rotary tube inspection system 2 includes a base 35, a motor 36, a rotary shaft 37, a rotary inspection table 12, a cam 46, a cam follower 47, centering shafts 48, centering jigs 38, inspection devices 39, a camera selector 43, a mixer 44, an antenna unit 45 to which signal transmission device is applied, a rotary resolver 49, a fixed resolver 50, a light quantity checker 51. The rotary tube inspection system 2 inspects laminate tubes T and produces inspection image signal. The inspection image signal is transmitted to a signal processing unit via the antenna unit 45, the details of which will be described later.

At the center of the base 35, a fixed shaft (not shown) is provided, and the rotary shaft 37 has a shaft center common to that of the fixed shaft so that the rotary shaft 37 covers the fixed shaft. The rotary shaft 37 is rotationally driven by the motor 36. The rotary resolver 49 and the fixed resolver 50 are provided to measure angular position of the fixed shaft and the rotary shaft 37. The rotary inspection table 12 is coupled to the rotary shaft 37 and revolves in association with the rotary shaft. On the rotary inspection table 12, the holder H for holding the tube T can be mounted. The holder H is moved up and down and rotated by the centering shaft 48. Upward and downward movement of the holder H is carried out by the cam 46 and the cam follower 47 provided at the lower end of the centering shaft 48. Into the holder H, the squeezing exit side of the laminate tube T may be inserted. The centering jig 38 for circularly holding the rear side of the tube T is supported at the upper portion of the holder H. The inspection device 39 for inspecting inside of the laminate tube T includes an insertion portion 40, a bore scope 41 and a CCD camera 42. The bore scope 41 includes a bore scope body 52 and a bore scope insertion portion 53. The insertion portion 40 includes the bore scope insertion portion 53, a light emitting diode section 54 and a photo sensor 55. The bore scope insertion portion 53 mainly inspects the internal bottom surface side, i.e., the squeezing opening side, in the figure of the laminate tube T, and the photo sensor 55 mainly inspects the internal side surface of the laminate tube T.

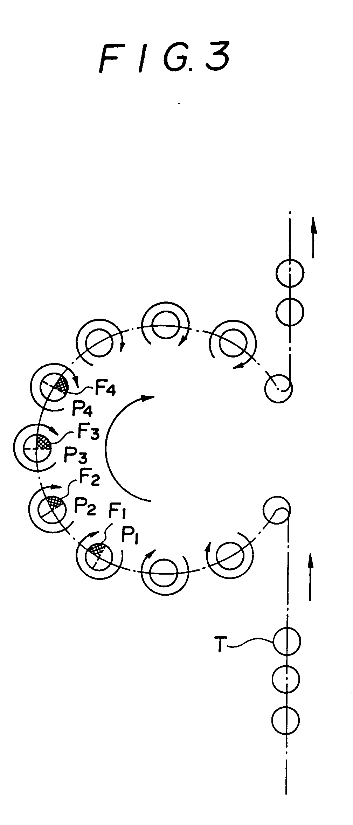

Next, an operation of the rotary tube inspection system will be described with reference to FIGS. 1 to 3. As shown in FIG. 1, a laminate tube T is held by the holder H and transferred to the star wheel 15 by the carrying conveyer 9. The star wheel 11 takes out the laminate tube T with the holder H and disposes it on the rotary inspection table 12 of the inspection system 2. After being disposed on the rotary inspection table 12, the holder H moves upwardly and downwardly according to the movement of the centering shaft 48 which follows the curve of the cam 48, and revolves intermittently around the centering shaft 48. Namely, as shown in FIG. 3, the laminate tube T revolves on its axis while revolving around the rotation shaft 37 in the rotating direction of the rotary inspection table 12. In the revolution, the laminate tube T pauses the revolution at the positions P₁ to P₄ for a predetermined time. When the holder H moves upwardly, the laminate tube T also moves upwardly, and the insertion portion 40 of the tube inspection device 39 is inserted into the laminate tube T circularly held by the centering jig 38. In this way, the laminate tube T intermittently revolves on its axis at the positions P₁ to P₄ with the insertion portion 40 being inserted, and the tube inspection device 39 inspects bottom and internal wall of the tube at the periods from P₁ to P₄. The light quantity of the insertion portion 40 is checked by the light quantity checker 51 before the insertion thereof, and the result is used in data processing. If the light quantity is less than a reference value, an alarm is issued and the light emitting element is exchanged, if necessary.

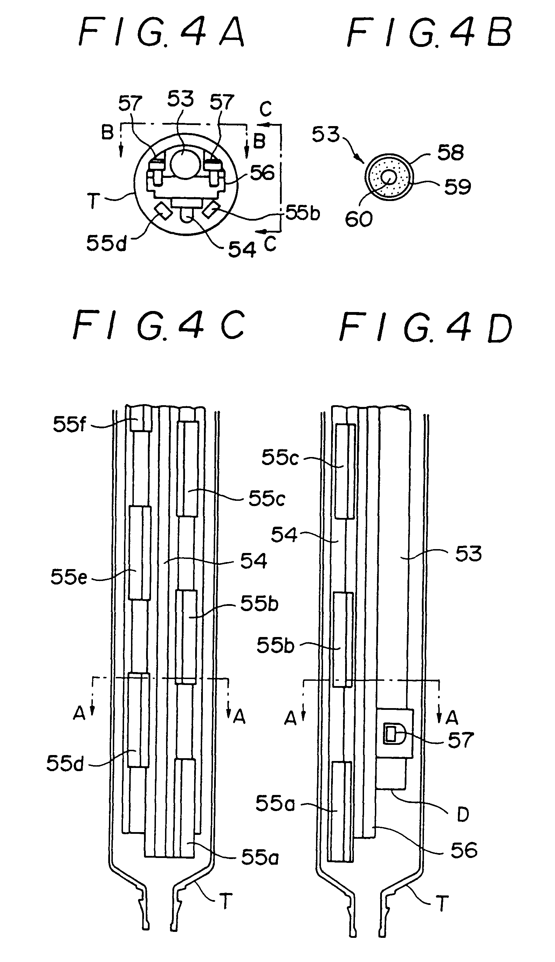

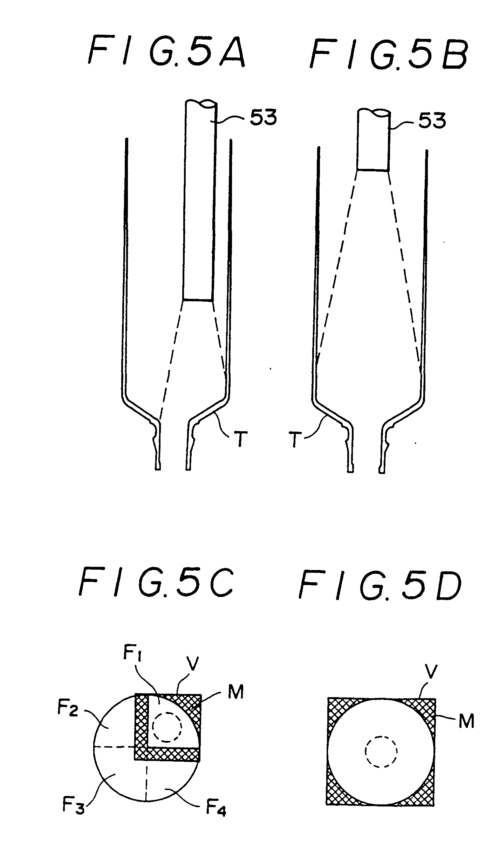

Next, construction and operation of the insertion portion 40 will be described in more detail with reference to FIGS. 4A - 4D and FIGS. 5A - 5D. FIG. 4A is a cross sectional view of the insertion portion 40 with the bore scope being inserted, and FIG. 4B is a cross sectional view of the bore scope insertion portion 53. FIGS. 4C and 4D are cross sectional views of the insertion portion 40 sliced along the B - B line and the C - C line shown in FIG. 4A. The insertion portion 40 includes a light emitting diode section 54 and photo-sensors 55a, 55b, 55c, 55d, 55e and 55f which are fixed to the bore scope insertion portion 53 by a metal fitting 56 and a bolt 57. As shown in FIG. 4B, at the bore scope insertion section 53, a lens section 60 for picking up an image is provided inside of a stainless tube 58, and a light source bore fiber section 59 including a fine grass fiber is provided around the lens portion 60. In FIG. 4B, while the end surface D of the bore scope insertion section 53 is perpendicular to the axis of the bore scope insertion section 53, it may take a form obliquely cut at certain angle with respect to the axis. In this case, visual field is expanded not only in a vertical downward direction but also in an oblique direction. The bore scope insertion section 53 is inserted into the laminate tube T in the state eccentric with respect to the axis thereof. This is illustrated in FIGS. 5A to 5C. Namely, the inspecting region F₁ of the bore scope insertion portion 53 becomes a portion of quadrant obtained by eliminating a mask portion (hatched portion M) from a square camera visual range V. The laminate tube T intermittently performs, as shown in FIG. 3, revolution on its axis and temporarily pauses the revolution at the inspection positions P₁, P₂, P₃ and P₄. For this reason, the region F₁ can be inspected during the stopping period at the position P₁. Similarly, the region F₂ is inspected during the stopping period at the position P₂. In the same manner, the regions F₃ and F₄ are inspected during the stopping period at the positions P₃ and P₄, respectively. In this way, the bottom area of the laminate tube T divided into the inspection regions as shown in FIG. 4A and 4C, and image pickup is carried out in the state where the bore scope insertion portion 53 is positioned close to the bottom of the laminate tube T, thereby making it possible to further improve the resolution as compared with the method of locating the bore scope insertion portion 53 on the axis of the laminate tube T to carry out inspection as a single inspection region as shown in FIGS. 4B and 4D. Thus, this method can detect a defect of a more fine mixture or flaw, etc. It is to be noted that the number of division of the bottom area is not limited to four, but may be other values.

The light emitting diode section 54 has a length long enough to cover the internal wall surface from the bottom to the upper opening of the laminate tube T, so that it can light the inside wall surface from the upper end to the lower end. Respective pairs of photo-sensors 55a - 55c and 55d - 55f are attached on the light emitting diode section 54 along the both side lines thereof. As shown in FIG. 4C, these photo-sensors are provided so that inspection regions overlap with each other. By such a construction, photo-sensors 55a to 55f can inspect the inside wall surface of the laminate tube T while it is revolving on its axis. In this case, photo-sensors 55a to 55f may be provided in a single alignment, and photoelectric conversion elements, e.g., CCD element, other than the photosensor may be alternatively employed.

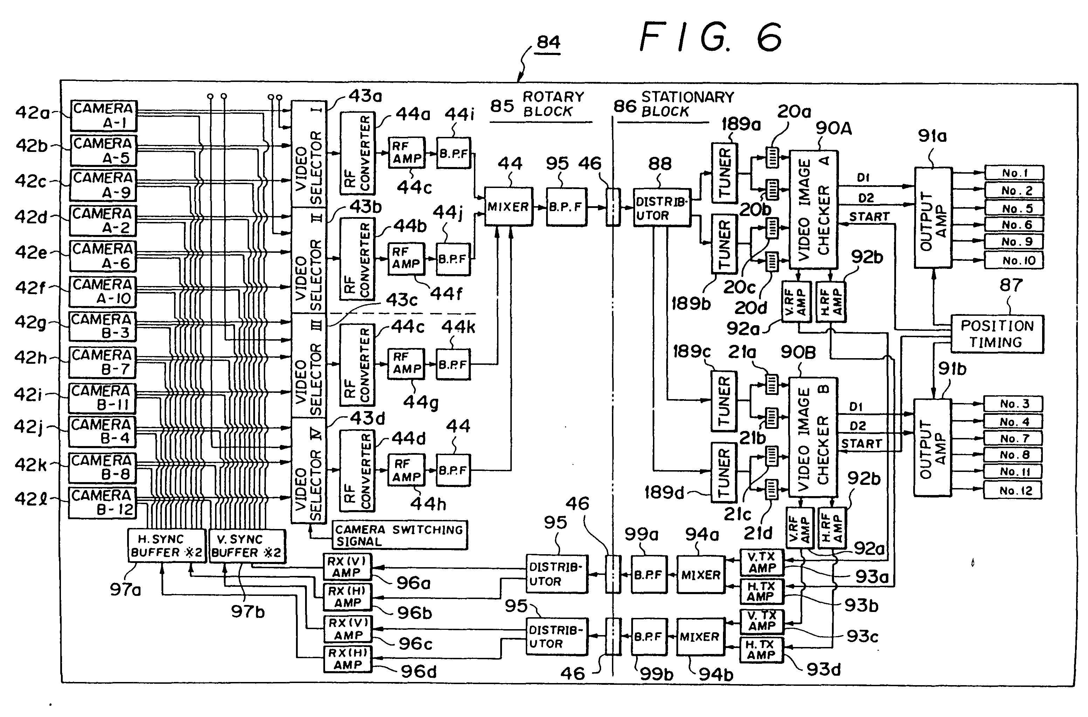

Next, processing of the inspection image signal picked up by the inspection device 39 will be described. The following description is only directed to the processing of inspection image signals taken by the CCD cameras 42, for the sake of simplicity. FIG. 6 is a block diagram illustrating signal processing unit. The signal processing unit is roughly divided into two units, a rotary block 85 and a stationary block 86. The rotary block 85 corresponds to the side of the tube inspection system 2 for picking up inspection image signals using the CCD cameras 42. The stationary block 86 is an unit for judging the quality of the laminate tube T based on the inspection image signals picked up by the CCD cameras 42 in the rotary block 85. The inspection image signals are supplied to the antenna unit 45 which transmits the inspection image signals to the stationary block 86 while one side of the antenna unit being revolving. The details of the antenna unit will be descried later. As shown in FIG. 6, the rotary block 85 includes twelve CCD cameras 42a to 421, and VIDEO selectors 43a, 43b, 43c and 43d to sort twelve CCD cameras into four groups each having three cameras to select one of three cameras to obtain the inspection image. Inspection image selected by the VIDEO selectors 43a, 43b, 43c and 43d are converted by an RF converter. These signals thus obtained are amplified by RF amplifiers 44e, 44f, 44g and 44h. The signals amplified by the RF amplifiers 44e, 44f, 44g and 44h are passed through band pass filters (BPF) 44i, 44j, 44k and 441. Thereafter, these signals are sent to a mixer 44 for mixing signals selected by the four VIDEO selectors 43a, 43b, 43c and 43d. A signal output from the mixer 44 is sent to the antenna unit 45a through the BPF 95. The antenna unit 45a transmits the signal from the rotary block 85 to the stationary block 86 in non-contacting manner while rotary block side of the antenna unit being revolving. Details of the antenna unit which corresponds to the signal transmission device according to the present invention will be described later.

The image signal is delivered to the distributer 88 from the antenna unit 45a. The stationary block 86 includes a distributor 88 for distributing the received image signal into four tuners, 89a, 89b, 89c and 89d corresponding to frequencies converted by the previously described four RF converters 44a, 44b, 44c an 44d, and memory sections 20a, 20b, 20c, 20d, 21a, 21b, 21c and 21d for recording images reproduced by the above mentioned four tuners 89a, 89b, 89c and 89d. Then, image data stored in the memory sections 20a, 20b, 20c and 20d are delivered to the video image checkers 90A and 90B for processing the image data. Data processed by the video image checkers 90A and 90B are output as judgement outputs through output amplifiers 91a and 91b. On the other hand, horizontal and vertical synchronizing signals are output from the video image checkers 90A and 90B, and are amplified by signal amplifiers 92a and 92b, respectively. Then, synchronizing signals from the signal amplifiers 92a and 92b are transmitted to respective amplifiers 93a, 93b, 93c and 93d, and amplified by them. Thereafter, synchronizing signals from the amplifiers 93a, 93b, 93c and 93d are mixed by mixers 94a and 94b. The mixed signal thus obtained is sent to the rotary block 85 through the BPFs 99a and 99b and the antenna units 45b and 45c. A signal received by the antenna unit of the rotary block 85 side is distributed into two sets of amplifiers on the receiving side by the distributor 95. Signals output from the amplifiers 96a, 96b, 96c and 96d are sent to the CCD cameras 42a to 421 through buffers 97a and 97b. At this time, the synchronising signals are distributed so that the respective video checkers corresponds to the respective cameras taken in charge of the respective video checks. These synchronising signals are transmitted together with image signals from the CCD cameras, and those image signals are discriminated in the stationary block 86 in accordance with the synchronising signals. By the video image checkers 90A and 90B, image signals to be processed are binarized. As a result, if any foreign material, such as defect or contaminant, is not found, an OK signal is output to the amplifiers 91a and 91b, while if any foreign material is found, no good signal is output thereto. The amplified signals are output as judgement output indicating the quality of the laminate tube T from those amplifiers.

### Signal Transmission Device:

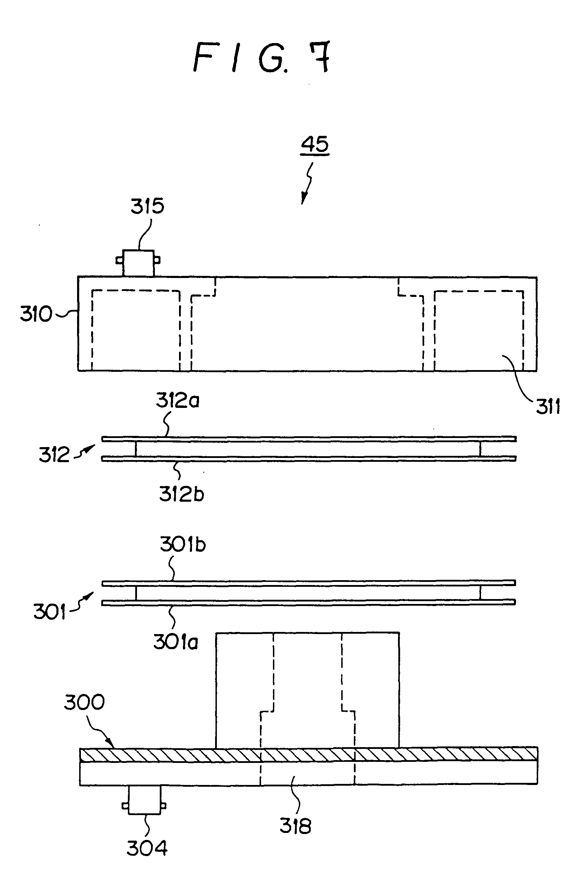

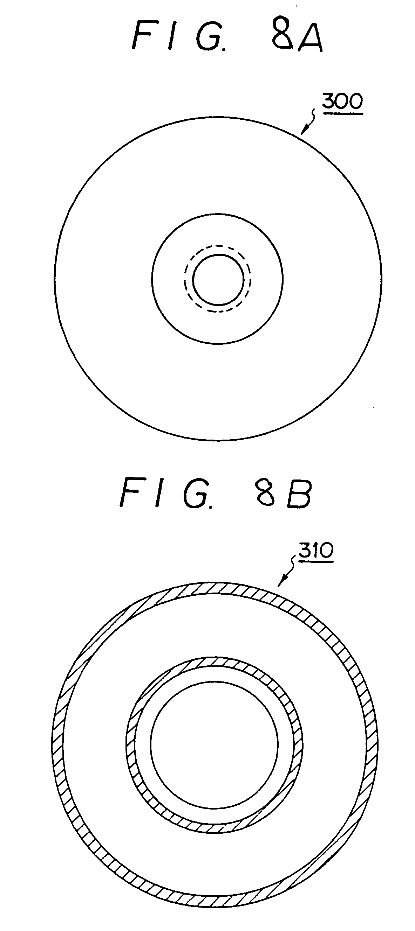

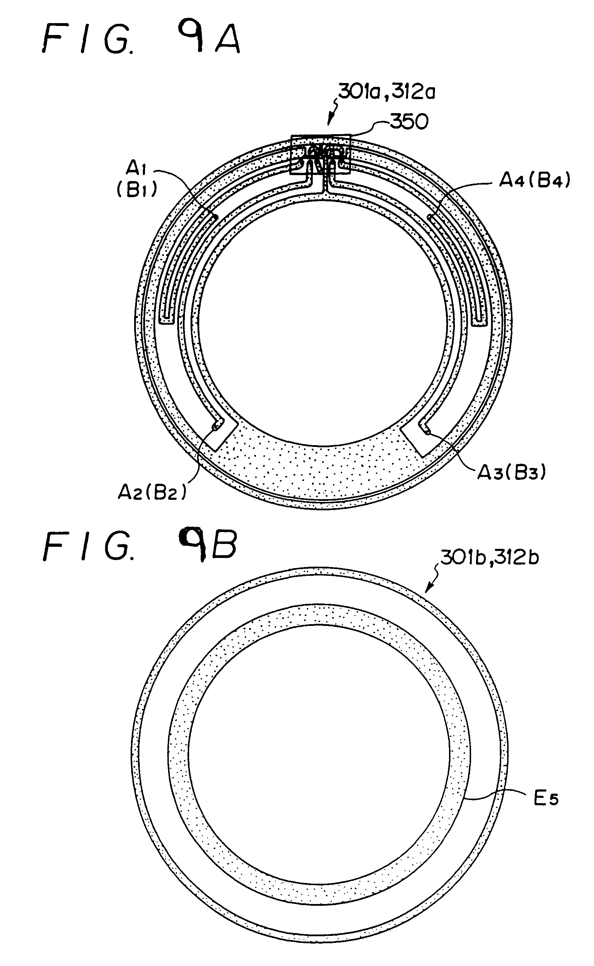

Next, an embodiment of a signal transmission device of the present invention will be described. Figure 7 shows a side view of an antenna unit 45 according to an embodiment of the invention. As shown in Figure 7, the antenna unit 45 includes a transmitting unit 300 and a receiving unit 310. Figure 8A and Figure 8B are plan views of the transmitting unit 300 and the receiving unit 310, respectively. The transmitting unit 300 and the receiving unit 310 are coupled with each other in the vertical direction, as shown in Figure 7, and inside of the antenna unit 45 thus coupled is electromagnetically shielded from external. The transmitting unit 300 and the receiving unit 310 are constantly opposite to each other while one of them is revolving, and therefore signal is reliably transmitted during the revolution. In addition, since the antenna unit 45 is thus shielded, signal transmission is not disturbed by external noise and the transmission signal does not leak out to the external. In consideration of the shielding property, the transmitting unit 300 and the receiving unit 310 are made of A1 aluminium, for example. The transmitting unit 300 is provided with an opening 318 for receiving and holding the rotary shaft 37 which pierces through the opening 318, and the transmitting unit 300 revolves around the rotary shaft 37 due to the revolution of the rotary shaft 37. Signal from the BPF 95 is supplied to a transmitting element 301 horizontally held in the transmitting unit 300. The transmitting unit 301 includes substrates 301a and 301b coupled to each other in parallel with a given spacing therebetween, the surfaces of the substrates 301a and 301b are illustrated in FIG. 9A and 9B. The substrates 301a is comprised of a glass epoxy resin substrate on which copper element is formed in the shape shown in FIG. 9A, and the substrates 301b is comprised of a glass epoxy resin substrate on which copper element is formed in the shape shown in FIG. 9B. In the portion 350 on the substrate 301a, baluns are provided (described later). Transmission signal from the mixer 44 is radiated from the element 301. On the other hand, the receiving unit 310 is provided with a ring-shaped groove 311 in which a receiving element 312 having the shape and construction identical to the element 301 is horizontally disposed. By constructing the transmitting element 301 and the receiving element 312 to be identical shape and construction, frequency characteristics of both elements become identical, and level of output signal is stabilized. This is advantageous in bi-directional transmission described later. In signal transmission, the transmitting unit 300 revolves according to the revolution of the rotary shaft 37 while the receiving element 310 is fixed. The transmitting element 301 and the receiving element 312 confront with each other with a spacing of approximately 3 mm therebetween. Therefore, according to the revolution of the rotary shaft 37, the receiving element 312 revolves, with maintaining the spacing to the transmitting element, above the transmitting element 301, thereby signal is transmitted. The transmitting unit 300 and the receiving unit 310 are provided with BNC connecters 304 and 315 and lead wires (not shown) for inputting and outputting signals, respectively. It is noted that the transmitting element 301 and the receiving element 312 are required to revolve relatively, and either one of them may be driven. Preferably, the elements 301 and 312 made of conductive material may be formed loop shape so that signals are equally supplied to multiple signal input points and equally output from multiple signal output points.

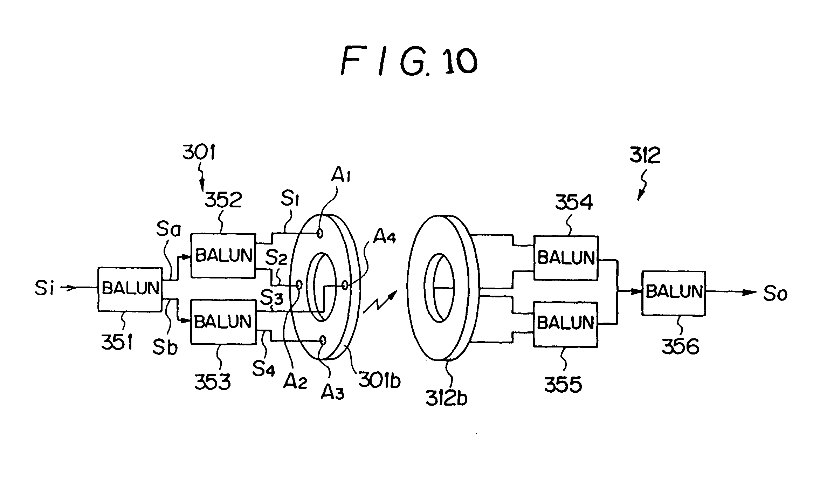

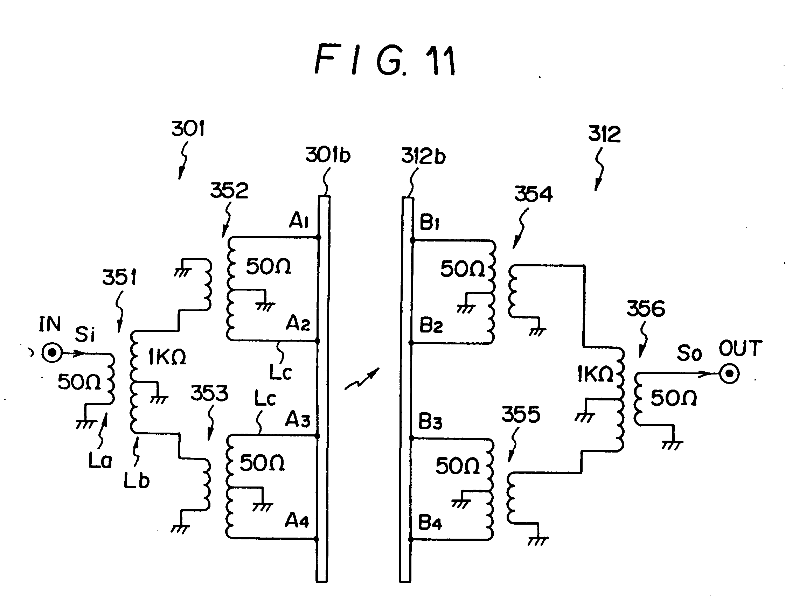

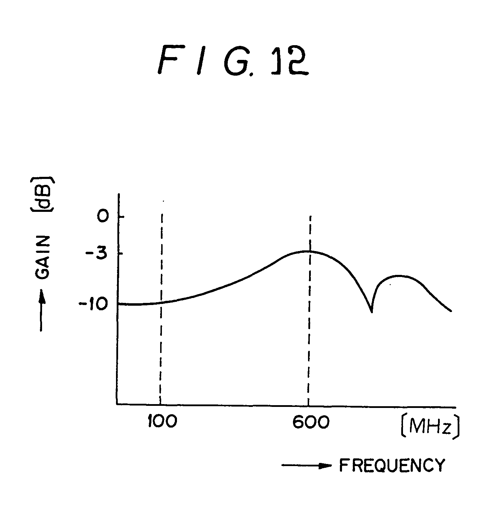

Next, signal transmission manner will be described below. FIG. 10 is a block diagram illustrating constructions of the transmitting element 301 and the receiving element 312, and FIG. 11 is a diagram illustrating concrete circuit of the elements 301 and 312. The transmitting element 301 includes the substrates 301a and 301b, as shown in FIG. 8, and further includes three baluns 351 - 353 held in a manner sandwiched by the substrates 301a and 301b. Specifically, the baluns 351 - 353 are provided at the portion 350 of the substrate 301a, and signals output from the baluns 352 and 353 are supplied to the signal input points A₁ - A₄ of the substrate 301a via conductive elements having same lengths. The signal input points A₁ - A₄ are provided at positions having angles of 90 degrees with respective to the neighboring points, respectively, and connected to corresponding points of the confronting substrate 301b by lead wires. Signal Sᵢ supplied to the transmitting element 301 is radiated from the element E₅ of the substrate 301b shown in FIG. 9B . It is noted that, in FIGS. 1 and 11, the substrate 301a is omitted and only the substrate 301b is illustrated, for the sake of simplicity. The receiving element 312 has the same shape and construction as the transmitting element 301. Namely, three baluns 354 - 356 are provided between the substrates 312a and 312b, and four input terminals of the baluns 354 and 355 are connected to the signal output points B₁ - B₄ provided every rotational angles of 90 degrees. Accordingly, the transmitting element 301 and the receiving element 312 confront with each other with the inner element surfaces shown in FIG. 9B facing with each other inside thereof, and signal is transmitted between the element surfaces 301b and 312b.

Next, operation of the antenna unit 45 will be described. The inspection signal Sᵢ generated by the rotary block 85 is input to the balun 351. Balun is a circuit for conversion between balanced circuit and unbalanced circuit, and the balun 351 is constituted by a transformer circuit including opposing coils. In the balun 351, input-side coil La has an impedance 50Ω, and output-side coil Lb has an impedance of 1kΩ. Therefore, the inspection signal Sᵢ is subjected to an impedance conversion and is divided into two signals Sa and Sb. The signals Sa and Sb are input to the baluns 352 and 353, respectively. The baluns 352 and 353 are also constituted by a transformer circuit, however, input-side coil Lb has an impedance 1kΩ and output-side coil Lc has an impedance 50Ω. Accordingly, the signal Sa is output as signals S₁ and S₂ having impedance 50Ω, and the signal Sb is output as signals S₃ and S₄ having impedance of 50Ω. The signals S₁ - S₄ thus produced are supplied to the signal input points A₁ - A₄, respectively. The transmitting element 301 and the receiving element 312 function as a kind of condenser in signal transmission. The signals S₁ - S₄ are radiated from the four signals input points A₁ - A₄, transmitted by capacitive coupling and received by the receiving element 312. Namely, between the confronting substrates 301 b and 312b, signal radiated from the element E₅ on the substrate 301 b shown in Figure 9 is propagated through the spacing between the elements, and received by the ring-shaped element E₅ on the substrate 312b. As is described above, the receiving element 312 is of the same shape and construction as the transmitting element 301, and the signals received by the receiving element E₅ is output from the four signal output points B₁ - B₄. These signals are subjected to impedance conversions 50Ω to 1kΩ and 1kΩ to 50Ω by the series of baluns 354 - 356 having constructions identical to the series of baluns 351 - 352, and combined and output as a unique signal So to signal processing unit.

The signal transmission device of the invention, thus constructed, has the baluns interposed between the signal input/output sides and signal transmission elements, and the signals are equally supplied to multiple points of the transmitting element and signals are equally output from multiple points of the receiving element. By interposing the baluns, impedance matching is improved among the signal input side, transmitting/receiving elements and signal output side, and signal reflection is absorbed and stabilised. Further, since the impedance of the signal is converted to high impedance by the baluns, it is possible to reduce the influence of external noise, or capacity variations caused by the unevenness of the physical shapes of element portions on the signal transmission characteristic. Still further, since signals are supplied to and ouput from multiple points on the elements, distribution of signal transmission intensity between the elements is averaged. For the reasons described above, variation of signal transmission characteristics is stabilised. Further, since the transmitting element 301 and the receiving element 312 are connected to the signal input points A₁ - A₄ and signal output points B₁ - B₄ via the baluns and elements of identical lengths, respectively, signals at each signal input/output points does not differ from each other in their magnitude and phase, and are radiated under the same conditions. This contributes to equalisation of signal transmission intensity between the elements.

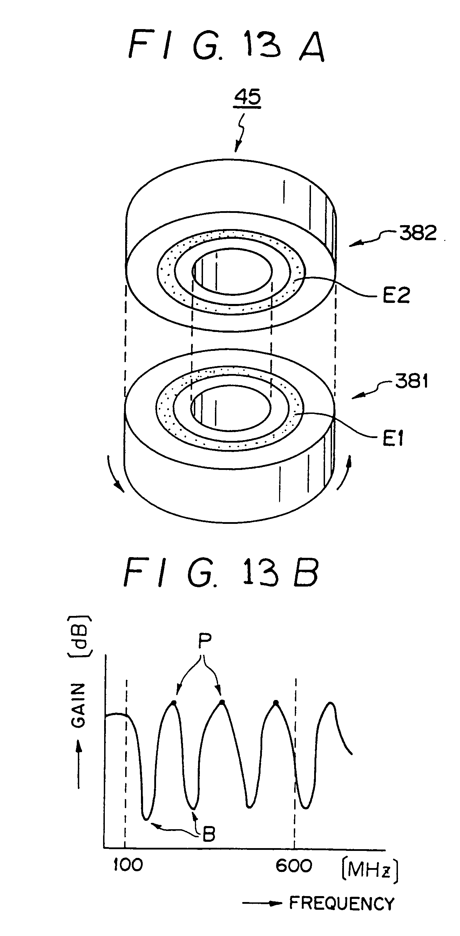

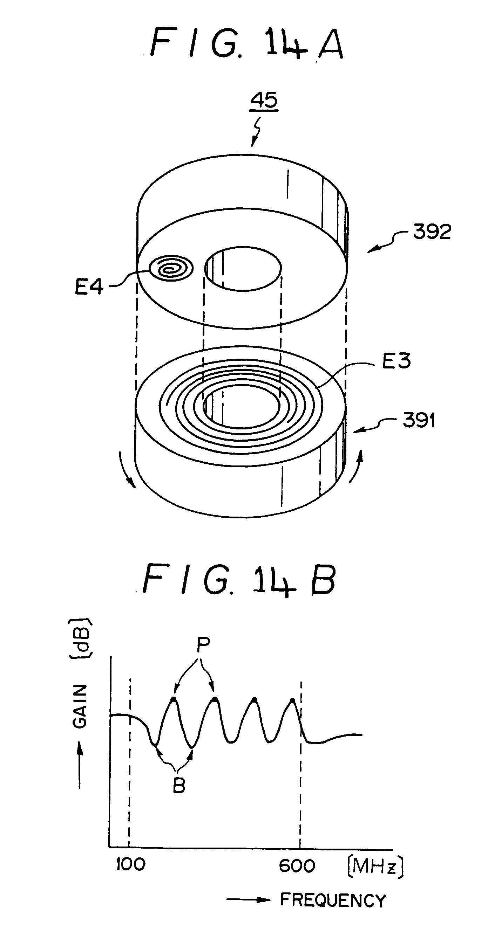

Figure 12 shows a transmission characteristic of the signal transmission device, and Figures 13B and 14B show transmission characteristics of the signal transmission device shown in Figures 13A and 14A. From these figures, it is clear that the variation of transmission gain within the frequency band of transmission signal is improved.

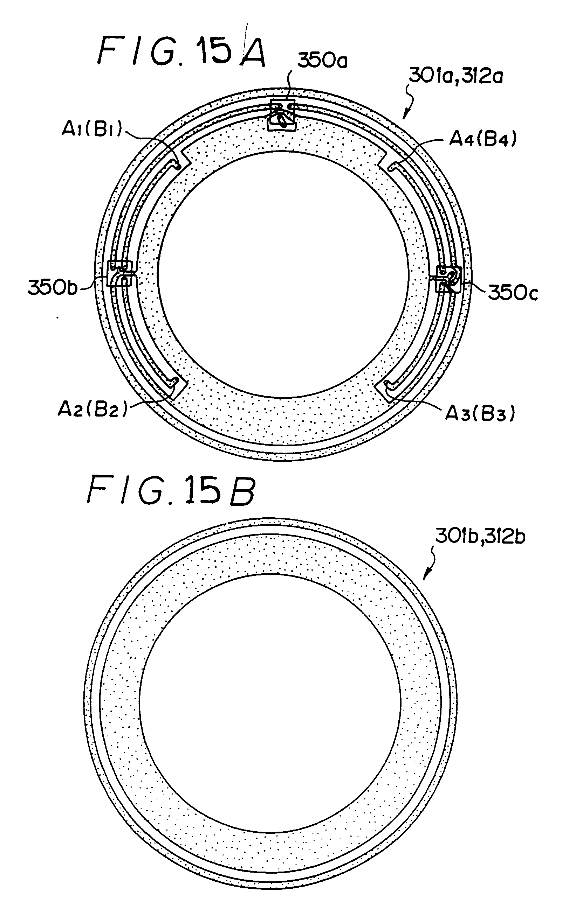

In the signal transmission device 45, the transmitting element 301 and the receiving element 312 are positioned confronting with each other. In an actual experiment, the two elements 301 and 312 are positioned with a spacing approximately 3 mm therebetween. If the spacing between the two elements is narrow, the transmission gain is increased. However, according to the revolution of one of the elements, relative positional relationship of the four signal input points and four signal output points varies, and the transmission gain varies time to time depending upon the relative positional relationship. The narrower the spacing of the elements is, the larger the variation of transmission gain becomes. In this view, it is required that the two elements are positioned with such an appropriate interval therebetween that intensity of signals radiated from the four signal input points are almost equally received by any signal output points of the receiving element. In the above described embodiment, the numbers of the signal input points on the transmitting element 301 and signal output points on the receiving element 312 are four. However, if the numbers are increased, unevenness of the signal transmission intensity is further equalized, and variation of transmission gain is further stabilized. In addition, in the above described embodiment, the number of the signal input points is equal to the number of the signal output points. However, if they are different, the transmission intensity may be further equalized. It is noted that the transmitting element 301 and the receiving element 312 may be formed in the manner shown in FIGS. 15A and 15B. In this case, the three baluns are provided at the positions 350a - 350c, respectively. However, the four signal input points and the four signal output points are provided at every rotational angles 90 degrees in the same manner as shown in FIGS. 9A and 9B.

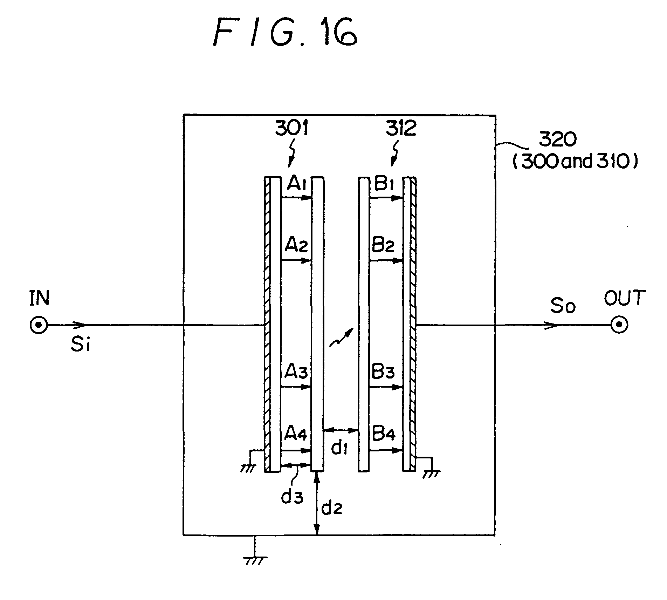

Next, positions of the elements within the signal transmission device body will be examined. As shown in FIG. 16, in the above described signal transmission device, the transmitting element 301 and the receiving element 312 are magnetically shielded from the external by the transmitting unit 300 and the receiving unit 310 (hereinafter referred to "casing"). It is preferable that the distance d₁ between the transmitting element 301 and the receiving element 312 is larger than the distance d₂ to the casing 320 and the distance d₃ to the GND surface of the transmitting element 301. By doing so, the capacitance of the transmitting element 301 with respect to the receiving element 312 becomes larger than the capacitance of the transmitting element 301 with respect to the casing 320 and the GND surface. As a result, signal propagating to the receiving element becomes larger than the signal propagating to the casing, and efficient signal transmission can be performed.

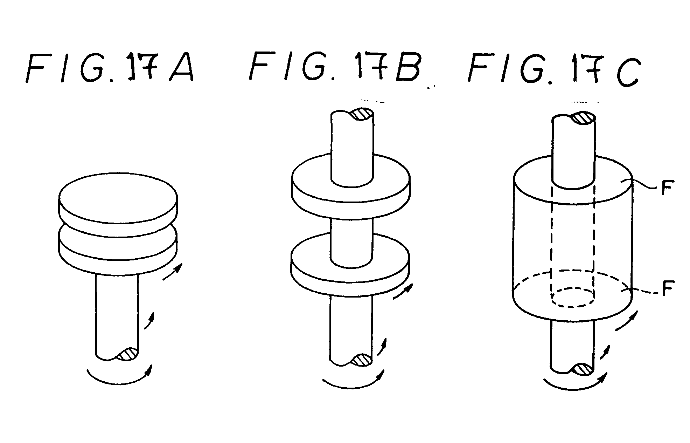

In the signal transmission device,it is required that the transmitting element and the receiving element revolve relatively with each other. In this regard, the rotary shaft may pierce through only one of the elements as shown in Figure 17B or pierces through only one of the elements as shown in Figure 17A. Alternatively, the elements may be provided on the upper or lower faces F of a cylindrical body, as shown in Figure 17C. The signal to be transmitted is equally supplied to multiple signal input points on the transmitting element via baluns. Therefore, signal reflection is absorbed. Further, signal transmission intensity between the elements is averaged, and therefore signal is stably transmitted with less variation of transmission gain within the signal transmission band. Still further, signal deterioration due to disturbance from external or variation of physical shapes of the elements may be avoided.

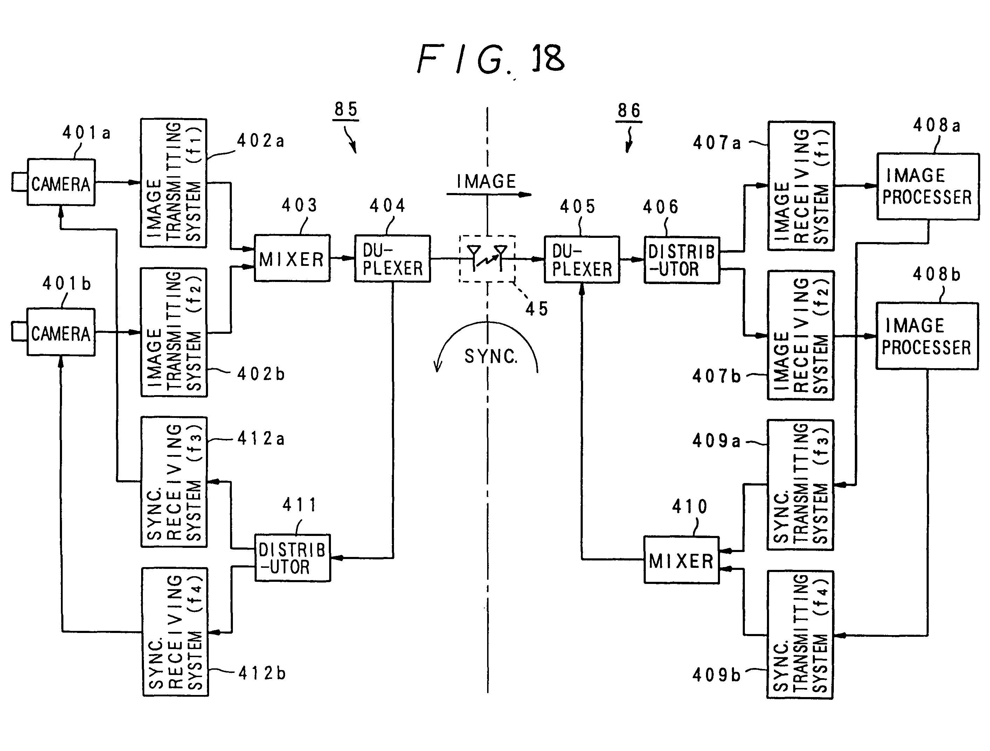

Figure 18 is a block diagram illustrating signal processing according to this embodiment. As shown in Figure 18, two inspection image signals produced by the cameras 401a and 401b are transmitted to the stationary block 86 via the antenna unit 45, and a synchronising signal produced by the image signal processing units 408a and 408b are transmitted to the rotary block 85 via the antenna unit 45. This will be described below in more detail. The inspection image signal picked up by the camera 401a is subjected to a frequency modulation in the image transmitting system 402a using a carrier frequency f₁, and then supplied to the mixer 403. The inspection image signal picked up by the camera 401b is also frequency-modulated in the image transmitting system 402b using a carrier frequency f₂, and then supplied to the mixer 403. The mixer 403 mixes the two frequency-modulated signals with each other, and supplies it to the duplexer 404. The duplexer 404 delivers the mixed image signal to the antenna unit 45. The antenna unit 45 transmits the image signal to the stationary block side 86 in a non-contacting manner. The inspection image signal thus transmitted is delivered to the distributor 406 via the duplexer 405. The distributor 406 distributes the inspection image signal into the inspection image signal modulated by the carrier f₁ and the inspection image signal modulated by the carrier f₂, and supplies them to the image receiving systems 407a and 407b, respectively. The image receiving systems 407a and 407b demodulate inspection image signals and supplies them to the image processors 408a and 408b, respectively. The image processors 408a and 408b carry out judgements relating to defects or dusts in the laminate tube based on the inspection image signals thus supplied. The image processors 408a and 408b produce synchronising signals (composite synchronising signals) for synchronous control of the cameras 401a and 401b. These synchronising signals are supplied to the sync. transmitting systems 409a and 409b. The sync. transmitting systems 409a and 409b modulate the synchronising signals by FM using the carrier frequencies f₃ and f₄, and supplies them to the mixed 410. The mixer 410 mixes the frequency-modulated synchronising signals, and output it to the duplexer 405. The duplexer 405 delivers the mixed synchronising signal to the antenna unit 45. The antenna unit 45 transmits the synchronising signal to the rotary unit 85 in a non-contacting manner. The synchronising signal thus transmitted is supplied to the distributor 411 via the duplexer 404, and is distributed into the synchronising signal modulated by the carriers f₃ and f₄. The synchronising signals are then input to the sync. receiving systems 412a and 412b, and demodulated to be the original composite synchronising signals, respectively. The synchronising signals are supplied to the cameras 401a and 401b to control pickup of inspection image.

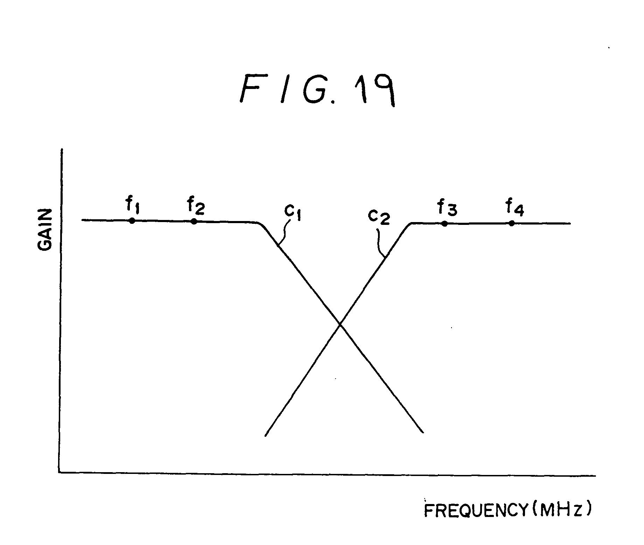

The duplexer 404 passes the inspection image signal supplied from the mixer 403 according to the transmission characteristic C₁ shown in Figure 50, and passes the synchronising signals supplied from the antenna unit 45 according to the transmission characteristic C₂ shown in Figure 19. Therefore, the inspection image signal from the mixer 403 does not intermix into the synchronising signal supplied to the distributor 411, and the synchronising signal from the antenna unit 45 does not input to the mixer 403. Similarly, the duplexer 405 passes the inspection image signal according to the transmission characteristic C₁, and passes only the synchronising signal from the mixer 410 to the antenna unit 45 according to the transmission characteristics C₂. According to the function of the duplexer, inspection image signal and synchronising signal are transmitted bi-directionally. As the antenna unit 45, various types of signal transmission devices may be employed. For example, spiral element type transmission device shown in Figure 13A and ring-shaped element type transmission device shown in Figure 14A may be used.

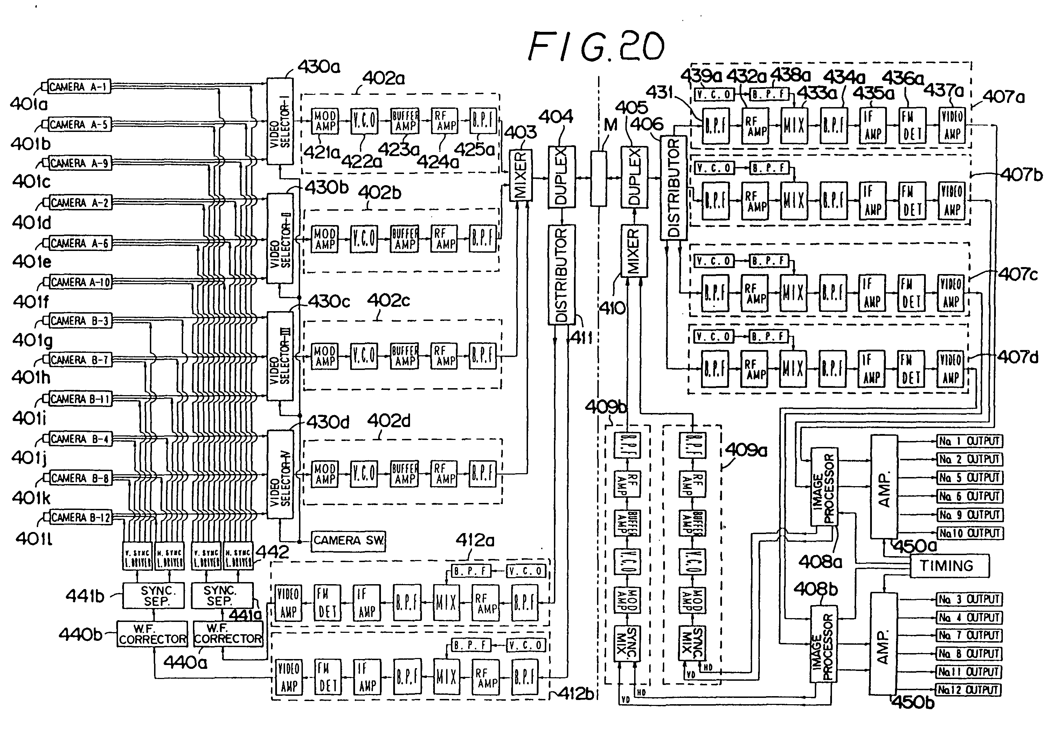

Next, details of the inspection block and the signal processing block will be described with reference to Figure 20. Every three lines of the inspection image signals picked up by the CCD cameras 401a - 4011 are input to the four video-selectors 430a - 430d. Each of the video-selectors outputs one inspection image out of three images to the image transmitting systems 402a - 402d in a time-division manner. Each of the video-selectors has identical construction and performs identical operation, and therefore the following description will be only directed to the image transmitting system 402a, for the sake of simplicity. The inspection image output from the video-selector 402a is amplified by the amplifier 421a to be a given amplitude, and input to the VCO 422a. The amplified image signal is used as a control voltage of oscillating frequency. This means modulating the oscillation frequency of the VCO (f₁) by the inspection image signal, and the output signal of the VCO is a frequency-modulated inspection image signal using the carrier signal of frequency f₁. This frequency-modulated inspection image signal is amplified by the buffer amplifier 423a and the RF amplifier 424a, and then input to the BPF 425a. The BPF 425a extracts the FM inspection image signal around the carrier frequency f₁. Namely, the BPF 425a functions to eliminate higher harmonics of the FM inspection image signal. The output signal of the BPF 425a is supplied to the mixer 403. Similarly, the image transmitting systems 402b - 402d modulate the inspection image signals using carrier frequencies f₂ - f₄, eliminate higher harmonics and supply them to the mixer 403. Signal mixed by the mixer 403 is transmitted to the distributor 406 via the duplexer 404, the antenna unit 45 and the duplexer 405. The distributor 406 distributes the FM inspection image signal mixed by the mixer 403 into four inspection image signals, and inputs them to the image receiving systems 407a - 407d. Here, each of the image receiving systems 407a - 407d has identical construction and perform identical operation, and therefore the following description will be only directed to the image receiving system 407a, for the sake of simplicity. The BPF 431a extracts component of the carrier frequency f₁ from the FM inspection image signal output from the distributor 406. The output signal from the BPF 431a is amplified by the RF amplifier 432, and supplied to the mixer 433a. On the other hand, output of the local oscillator 439a is supplied to the mixer 433a via the BPF 438a, and the signal frequencies are mixed therein. The output of the mixer 433a is transmitted to the FM detection circuit 436a via the BPF 434a and the IF amplifier 435a. The inspection image signal detected by the FM detection circuit 436a is amplified by the video amplifier 437a and supplied to the image processing device 408a so as to carry out image analysis. Similarly, each of the image receiving systems 407b - 407d carries out identical operation, and supplies the inspection image signal to the image processing devices 408a and 408b. The image processing devices 408a and 408b detect defect or dust in the laminate tube, and output resultant signal via the amplifiers 450a and 450b. On the other hand, the image processing devices 408a and 408b generate synchronizing signals for controlling synchronization of the CCD cameras 401, and supply them to the sync. transmitting systems 409a and 409b. The sync. transmitting systems 409a and 409b have construction identical to the image transmitting systems 402a - 402d, and modulate the synchronizing signals using the carrier frequencies (e.g., f₅ and f₆) by frequency-modulation and supply them to the mixer 410. The FM synchronizing signals are transmitted to the distributor 411 via the antenna unit 45, and then supplied to the sync. receiving systems 412a and 412b. The sync. receiving systems 412a and 412b have construction identical to the image receiving systems 407a - 407d, and demodulate synchronizing signals in the same manner. The demodulated synchronizing signals are subjected to the waveform correction, separated into the horizontal and vertical synchronizing signals by the sync. separators 441a and 441b, and then input to the CCD cameras via the drivers. In this way, the CCD cameras are controlled by the synchronising signals produced by the image processing devices in the signal processing block.

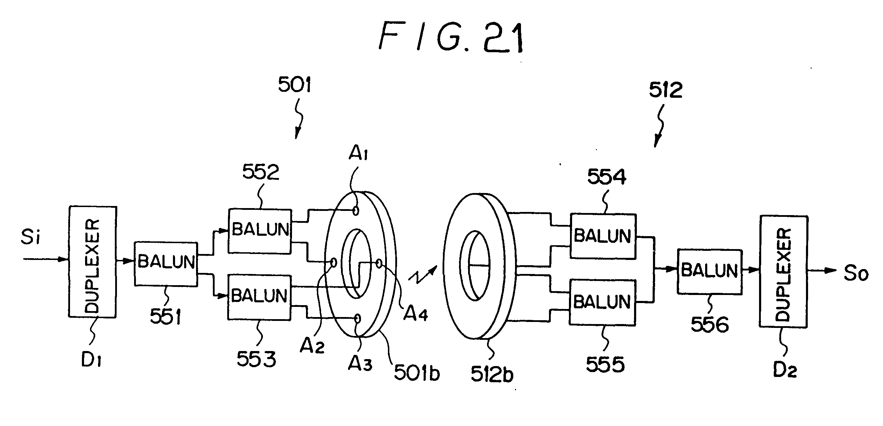

Figure 21 is a block diagram illustrating constructions of the transmitting element 501 and the receiving element 512. In this embodiment, a pair of duplexers D₁ and D₂ are provided in the antenna unit 45 shown in Figure 10 so as to achieve bi-directional transmission. In this modification, synchronising signals are transmitted from the signal processing block to the inspection block via the antenna unit shown in Figure 21. The CCD cameras pick up inspection images using the synchronising signals thus transmitted, and transmits the inspection images to the signal processing block via the antenna unit 45. By providing the duplexers in this manner, inspection image signal is transmitted from the inspection block to the signal processing block while synchronising signal is transmitted from the processing block to the inspection block using a unique antenna unit.

In the embodiment described above, signal transmitted by the antenna unit is image signal and synchronising signal, however, the present invention is not limited to this feature. It is possible to provide cameras on both sides of the antenna unit, and image signals picked up in both sides may be transferred bi-directionally. Further, signal to be transmitted is not limited to image signal and various kinds of signal may be transmitted. For example, control signal to control some kind of hardware or data signals may be transmitted.

As described above, bi-directional transmission is realised in a rotary system in which a portion of the system revolves.

## Claims

1. A signal transmission device (45) comprising:
a first body (300) fixed to a rotary shaft (37) which pierces through the first body, said first body revolving together with the rotary shaft around an axis of the rotary shaft;
a second body (310) stationarily disposed around the rotary shaft;
a first conductive element (301) disposed in the first body;
a second conductive element (312) disposed in the second body;
a first balun unit for supplying a signal to a signal-input point of one of the first and second conductive elements; and
a second balun unit for receiving a signal from a signal-output point of the second element,
**characterised in that** each of said first body (300) and said second body (310) is made of electromagnetic shielding material;
**in that** said first balun unit comprises a first balun stage (351) for converting the impedance of a signal (Si) to be transmitted from a first impedance to a second impedance which is higher than the first impedance; and a second balun stage (352, 353) for converting the impedance of the signal output by the first balun stage from the second impedance to the first impedance and for equally supplying the converted signal to multiple signal-input points (A₁ - A₄) on the first conductive element (301);
and **in that** said second balun unit comprises a first balun stage (354, 355) for converting the impedance of the signal received equally from multiple signal-output points (B₁ - B₄) on the second conductive element from a first impedance to a second impedance which is higher than the first impedance; and a second balun stage (356) for converting the impedance of the signal output by the first balun stage from the second impedance to the first impedance to produce an output signal (So).

2. A signal transmission device as claimed in Claim 1, wherein the number of signal-input points is different from the number of signal-output points.

3. A signal transmission device as claimed in any preceding claim, wherein bi-directional transmission is realised in a rotary system in which a portion of the system revolves.

4. A signal transmission device as claimed in any preceding claim, wherein one of the first body and the second body (300, 310) comprises at least one annular groove (111), the annular groove produces a ring-shaped hollow chamber when the first body and the second body are coupled to each other, and the first element and the second element are opposed to each other in the hollow chamber.

5. A signal transmission device as claimed in any preceding claim, further comprising :
a first duplexer (D₁) for passing a signal within a first predetermined frequency band and supplying the passed signal to the first conductive element (501); and
a second duplexer (D₂) for receiving a signal from the second element (512) and passing the signal within a second frequency band.

## Patentansprüche

1. Signalübertragungsvorrichtung (45), umfassend:
einen ersten Körper (300), der an einer drehbaren Welle (37) befestigt ist, die den ersten Körper durchdringt, wobei sich der erste Körper zusammen mit der drehbaren Welle um eine Achse der drehbaren Welle dreht;
einen zweiten Körper (310), der ortsfest um die drehbare Welle angeordnet ist;
ein erstes leitfähiges Element (301), das in dem ersten Körper angeordnet ist;
ein zweites leitfähiges Element (312), das in dem zweiten Körper angeordnet ist;
eine erste Bahneneinheit zur Lieferung eines Signals an einen Signaleingangspunkt des ersten oder des zweiten leitfähigen Elements, und
eine zweite Bahneneinheit zum Empfang eines Signals von einem Signalausgangspunkt des zweiten Elements,
**dadurch gekennzeichnet, dass** der erste Körper (300) und der zweiten Körper (310) aus einem elektromagnetisch abschirmenden Material gefertigt sind;
dass die erste Bahneneinheit eine erste Bahnenstufe (351) zur Umwandlung der Impedanz eines zu übertragenden Signals (Si) von einer ersten Impedanz in eine zweite Impedanz, die größer ist als die erste Impedanz; und eine zweite Bahnenstufe (352, 353) zur Umwandlung der Impedanz des von der ersten Bahnenstufe ausgegebenen Signals von der zweiten Impedanz in die erste Impedanz und zur gleichmäßigen Lieferung des umgewandelten Signals an mehrere Signaleingangspunkte (A₁ - A₄) an dem ersten leitfähigen Element (301) umfasst;
und dass die zweite Bahneneinheit eine erste Bahnenstufe (354, 355) zur Umwandlung der Impedanz des Signals, das von mehreren Signalausgabepunkten (B₁ - B₄) an dem zweiten leitfähigen Element gleichmäßig empfangen wird, von einer ersten Impedanz in eine zweite Impedanz, die größer ist als die erste Impedanz, und eine zweite Bahnenstufe (356) zur Umwandlung der Impedanz des Signals, das von der ersten Bahnenstufe ausgegeben wird, von der ersten Impedanz in die zweite Impedanz zur Erzeugung eines Ausgangssignals (So) umfasst.

2. Signalübertragungsvorrichtung nach Anspruch 1, wobei die Zahl an Signaleingangspunkten von der Zahl an Signalausgangspunkten abweicht.

3. Signalübertragungsvorrichtung nach einem der vorstehenden Ansprüche, wobei eine bidirektionale Übertragung in einem drehbaren System realisiert wird, in dem sich ein Abschnitt des Systems dreht.

4. Signalübertragungsvorrichtung nach einem der vorstehenden Ansprüche, wobei der erste Körper (300) oder der zweite Körper (310) mindestens eine Ringnut (111) umfasst, wobei die Ringnut eine ringförmige Hohlkammer bildet, wenn der erste Körper und der zweite Körper miteinander gekoppelt sind, und sich das erste Element und das zweite Element in der Hohlkammer einander gegenüber liegen.

5. Signalübertragungsvorrichtung nach einem der vorstehenden Ansprüche, des Weiteren umfassend:
einen ersten Duplexer (D₁) zum Durchlassen eines Signals innerhalb eines ersten festgelegten Frequenzbandes und zur Bereitstellung des durchgelassenen Signals für das erste leitfähige Element (501); und
einen zweiten Duplexer (D₂) zum Empfang eines Signals von dem zweiten Element (512) und zum Durchlassen des Signals in einem zweiten Frequenzband.

## Revendications

1. Dispositif de transmission de signal (45) comportant :
un premier corps (300) fixé à un arbre rotatif (37) qui perce à travers le premier corps, ledit premier corps tournant conjointement avec l'arbre rotatif autour d'un axe de l'arbre rotatif,
un second corps (310) disposé de manière stationnaire autour de l'arbre rotatif,
un premier élément conducteur (301) disposé dans le premier corps,
un second élément conducteur (312) disposé dans le second corps,
une première unité de transformateur symétrique-dissymétrique pour délivrer un signal à un point d'entrée de signal de l'un des premier et second éléments conducteurs, et
une seconde unité de transformateur symétrique-dissymétrique pour recevoir un signal provenant d'un point de sortie de signal du second élément,
**caractérisé en ce que** chacun dudit premier corps (300) et dudit second corps (310) est constitué d'un matériau de blindage électromagnétique,
**en ce que** ladite première unité de transformateur symétrique-dissymétrique comporte un premier étage de transformateur symétrique-dissymétrique (351) pour convertir l'impédance d'un signal (Si) destiné à être transmis à partir d'une première impédance en une seconde impédance qui est supérieure à la première impédance, et un second étage de transformateur symétrique-dissymétrique (352, 353) pour convertir l'impédance du signal délivré en sortie par le premier étage de transformateur symétrique-dissymétrique à partir de la seconde impédance en première impédance et pour délivrer de manière égale le signal converti à de multiples points d'entrée de signal (A₁ - A₄) sur le premier élément conducteur (301),
et **en ce que** ladite seconde unité de transformateur symétrique-dissymétrique comporte un premier étage de transformateur symétrique-dissymétrique (354, 355) pour convertir l'impédance du signal reçu de manière égale depuis de multiples points de sortie de signal (B₁ - B₄) sur le second élément conducteur à partir d'une première impédance en une seconde impédance qui est supérieure à la première impédance, et un second étage de transformateur symétrique-dissymétrique (356) pour convertir l'impédance du signal délivré en sortie par le premier étage de transformateur symétrique-dissymétrique à partir de la seconde impédance en première impédance pour produire un signal de sortie (So).

2. Dispositif de transmission de signal selon la revendication 1, dans lequel le nombre de points d'entrée de signal est différent du nombre de points de sortie de signal.

3. Dispositif de transmission de signal selon l'une quelconque des revendications précédentes, dans lequel une transmission bidirectionnelle est réalisée dans un système rotatif dans lequel une partie du système tourne.

4. Dispositif de transmission de signal selon l'une quelconque des revendications précédentes, dans lequel l'un du premier corps et du second corps (300, 310) comporte au moins une gorge annulaire (111), la gorge annulaire produit une chambre creuse en forme d'anneau lorsque le premier corps et le second corps sont couplés l'un à l'autre, et le premier élément et le second élément sont opposés l'un à l'autre dans la chambre creuse.

5. Dispositif de transmission de signal selon l'une quelconque des revendications précédentes, comportant de plus :
un premier duplexeur (D₁) pour passer un signal dans une première bande de fréquence prédéterminée et délivrer le signal passé au premier élément conducteur (501), et
un second duplexeur (D₂) pour recevoir un signal depuis le second élément (512) et passer le signal dans une seconde bande de fréquence.
